# EUROPEAN PATENT APPLICATION

(11) **EP 4 810 153 A1**
(43) Date of publication of application: **23.09.2026**
(21) Application number: 24897654.0
(22) Date of filing: 28.11.2024
(51) Int. Cl.: B01J 20/26, B01D 53/04, B01J 20/10, B01J 20/28, C01B 32/50

(54) **CO2 ADSORBENT**

(30) Priority: 01.12.2023 JP 2023203701
(71) Applicant: Noritake Co., Limited, Nagoya-shi, Aichi 451-8501 (JP)
(72) Inventor: AOYAMA, Erika, Nagoya-shi, Aichi 451-8501 (JP); KAWAHARA, Akihiro, Nagoya-shi, Aichi 451-8501 (JP); SHIRAI, Keisuke, Nagoya-shi, Aichi 451-8501 (JP); SUZUKI, Yuta, Nagoya-shi, Aichi 451-8501 (JP)
(74) Representative: Kramer Barske Schmidtchen Patentanwälte PartG mbB
(86) International application number: PCT/JP2024/042186
(87) International publication number: WO 2025/115970

(57) **Abstract**

The present disclosure provides a CO₂ adsorbing material having an excellent carbon dioxide adsorption performance. A CO₂ adsorbing material 100 disclosed herein comprises an amine compound 10 and a support structure 20 for supporting the amine compound 10. The support structure 20 is provided with: a resin matrix 30 having a three-dimensional network structure including pores 32; and porous particles 40 having a plurality of mesopores. The porous particles 40 are disposed in the pores 32 of the resin matrix, and the amine compound 10 is disposed in the mesopores of the porous particle 40.

## Description

### [Technical Field]

The present disclosure relates to a CO₂ adsorbing material that includes an amine compound and a support structure configured to support the amine compound. Incidentally, the present application claims the benefit of priority to Japanese Patent Application No. 2023-203701 filed on December 1, 2023. The entire contents of this application are hereby incorporated herein by reference.

### [Background Art]

An emission gas, which is emitted from a thermal power plant, a factory, an automobile, or the like, includes various harmful components, and thus it is required to develop a material or technique that can implement a selective separation or recovery. For example, the carbon dioxide (CO₂) being a greenhouse gas, and thus a significant reduction in an emitted amount is needed. In order to efficiently separate and recover the component as described above, a material is used that includes an active substance, such as adsorbing agent and catalyst, and a support configured to support this active substance. Patent Documents 1 and 2 are examples of such related techniques.

### [Citation List]

### [Patent Document]

[Patent Document 1] Japanese Patent Application Publication No. 2014-506836
[Patent Document 2] Japanese Patent Application Publication No. 2018-187574

### [Summary of Invention]

### [Technical Problem]

As the support configured to support a CO₂ adsorbing material (for example, an amine compound), for example, those having a base material of a honeycomb structure or a non-woven fabric can be used. These supports are disposed only on a surface of the base material, and thus there is a problem that a loading amount for the CO₂ adsorbing material per unit volume is small.

In addition, as another example of the support configured to support the CO₂ adsorbing material, it is possible to use a structure body configured with a support particle. As the support particle, for increasing the loading amount, it is possible to use a particle whose specific surface area size or pores capacity is large. The structure body, configured with the support particle as described above, can be formed by baking the support particle or densifying by pressing. Therefore, even if the support particle is used whose specific surface area size or pores capacity is large, the specific surface area size and the pores capacity become smaller during a formation of the structure body. Then, as a result, there is a matter that the loading amount for the CO₂ adsorbing material becomes smaller.

The present disclosure has been made in view of the above described circumstances, and a main object is to provide a CO₂ adsorbing material that exhibits an excellent carbon dioxide adsorption performance.

### [Solution to Problem]

The CO₂ adsorbing material disclosed herein comprises an amine compound and a support structure for supporting the amine compound. The above described support structure comprises a resin matrix that has a three-dimensional network structure having small pores, and a porous particle that comprises a plurality of mesopores. The above described porous particle is disposed in the pores of the resin matrix, and the amine compound is disposed in the mesopores of the porous particle.

According to the configuration described above, it is present without the mesopore of the porous particle being crushed or being filled with a resin, and thus it is possible to suitably increase the loading amount of the support structure for the amine compound. By this, it is possible to implement the CO₂ adsorbing material superior in a CO₂ adsorbing performance. In addition, the support structure of the herein disclosed CO₂ adsorbing material includes the three-dimensional network structure, and thus is superior in a gas diffusion property. As this result, it is possible to make the CO₂ being the adsorbing target efficiently come into contact with the amine, and therefore it is possible to improve the CO₂ adsorbing performance even if the amine loading amount is made to be smaller.

In one preferable aspect of the herein disclosed CO₂ adsorbing material, the loading amount for the above described amine compound is 24 mass% or more and 56 mass% or less.

According to the configuration described above, it is possible to further suitably enhance the CO₂ adsorbing performance of the CO₂ adsorbing material.

In one preferable aspect of the herein disclosed CO₂ adsorbing material, the above described amine compound includes at least a polyethyleneimine.

According to the configuration described above, it is possible to further stably exhibit the CO₂ adsorbing performance of the CO₂ adsorbing material.

In one preferable aspect of the herein disclosed CO₂ adsorbing material, a hydrothermal resistance is 120°C or more and 250°C or less.

According to the configuration described above, it is possible to provide the CO₂ adsorbing material being superior in the hydrothermal resistance, too.

In one preferable aspect of the herein disclosed CO₂ adsorbing material, the above described resin matrix includes a resin having glass transition temperature of 70°C or more and 250°C or less.

According to the configuration described above, it is possible to suitably enhance the heat resistance of the CO₂ adsorbing material.

In one preferable aspect of the herein disclosed CO₂ adsorbing material, the porous particle includes at least one selected from the group consisting of silica particle, alumina particle, ceria particle, zirconia particle, and titania particle.

According to the configuration described above, it is possible to further suitably support the amine compound.

### [Brief Description of Drawings]

[FIG. 1] FIG. 1 is a view that schematically shows a structure of a CO₂ adsorbing material in accordance with one embodiment.
[FIG. 2] FIG. 2 is a view that shows a CO₂ breakthrough curve and N₂ breakthrough curve of the CO₂ adsorbing material in Example 1.

### [Description of Embodiments]

Below, a preferred embodiment of a herein disclosed technique would be explained. Incidentally, the matters other than matters particularly mentioned in this description, and required for practicing the present disclosure, can be understood on the basis of technical contents taught by the present description and a common general technical knowledge for a person skilled in the art. Contents of the herein disclosed technique can be executed on the basis of the contents disclosed in the present description, and the technical common sense in the present field. Incidentally, a wording "A to B" representing a range in the present description means A or more and B or less.

### <CO₂ adsorbing material>

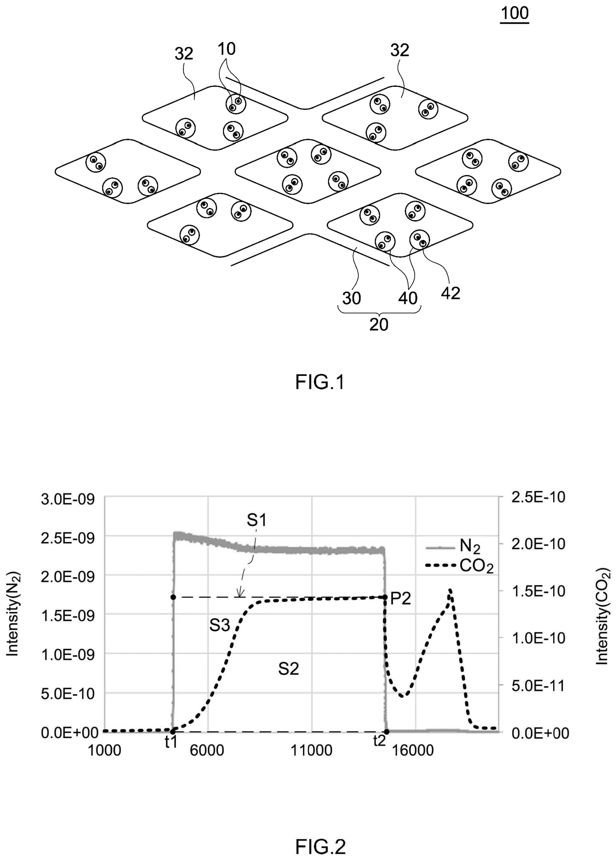

FIG. 1 is a view that schematically shows a structure of a herein disclosed CO₂ adsorbing material. As shown in FIG. 1, the herein disclosed CO₂ adsorbing material 100 comprises an amine compound 10 and a support structure 20 that is to support this amine compound 10. The support structure 20 includes a resin matrix 30 and a porous particle 40. The herein disclosed CO₂ adsorbing material 100 can support a larger amount of amine compound 10, because a plurality of pores 42 of the porous particle 40 is neither crushed nor filled with a resin, or the like. By this, it is possible to increase a loading amount of the CO₂ adsorbing material 100 for the amine compound 10 (below, which is simply referred to as "amine loading amount", too) more than a conventional one, and thus it is possible to implement the CO₂ adsorbing material 100 that can suitably exhibit a CO₂ adsorbing performance.

Incidentally, in the present description, the wording "CO₂ adsorbing material (below, which might be simply referred to as "adsorbing material")" is to be used for reversibly adsorbing and removing the carbon dioxide from a processed gas including the carbon dioxide.

In the CO₂ adsorbing material 100 disclosed herein, the pores 42 of a plurality of porous particles 40 included by the support structure 20 support the amine compound 10. The support structure 20 comprises, as shown in FIG. 1, a resin matrix 30 that comprises a three-dimensional network structure having the pores 42, and comprises the porous particle 40 that comprises a plurality of pores 42. The resin matrix 30 can function as a skeleton of the support structure 20. The resin matrix 30 can be configured, for example, by resin-made crystal particles being bound to each other. The pores 32 might be a communication hole that communicates to another pore. In these pores 32, the porous particles 40 are disposed. The porous particle 40 includes the pores 42. It is preferable that the porous particles 40 are present in the pores 32 under a state where most of the porous particles are separated from the resin matrix 30. It is possible, for example, with a thermogravimetry measurement (TG), or the like, to estimate whether the CO₂ adsorbing material 100 includes the support structure 20 having the resin matrix 30 and having the porous particle 40 and whether the support structure 20 supports the amine compound 10.

The CO₂ adsorbing material 100 disclosed herein can support a larger number of the amine compound 10 than the conventional one, because the porous particle 40 is disposed at the pores 32 of the resin matrix 30. By this, it is possible to suitably enhance a CO₂ adsorbing performance of the CO₂ adsorbing material 100. Although it does not intend to restrict the herein disclosed technique, it is possible, as described below, to estimate a reason why the above described effect can be obtained. Regarding the support structure 20, the porous particle 40 is disposed in the pores 32 of the resin matrix 30, and thus the porous particle 40 can be present in a state where the pores 42 of this porous particle 40 is neither crushed nor the pores 42 is filled with the resin, or the like. By this, in the CO₂ adsorbing material 100 disclosed herein, the loading amount for the amine compound 10 per unit area size is increased. In addition, the support structure 20 comprises the three-dimensional network structure, so as to be superior in the gas diffusion property. As this result, it is possible to make the CO₂ being the adsorbing target efficiently come into contact with the amine compound 10. By these effects, it is possible to implement the CO₂ adsorbing material 100 that has the CO₂ adsorbing performance being higher.

The CO₂ adsorbing material 100 disclosed herein has the amine loading amount that is suitably enhanced, as described above. Regarding the CO₂ adsorbing material 100 disclosed herein, for example, the loading amount for the amine compound 10 with respect to the CO₂ adsorbing material 100 is preferably 24 mass% or more and 56 mass% or less, further preferably 24.2 mass% or more and 56 mass% or less, furthermore preferably 30 mass% or more and 56 mass% or less, or preferably in particular 43 mass% or more and 56 mass% or less. Although more details would be described later with a test example, the CO₂ adsorbing material 100 disclosed herein can support about two times as much as the loading amount for the amine compound of the conventional CO₂ adsorbing material. By using the CO₂ adsorbing material 100 as described above, it is possible to sufficiently secure the adsorbing amount of the CO₂, even when it is smaller amount (lighter) than a conventional one. Incidentally, the CO₂ adsorbing material 100 disclosed herein is not restricted to have a specific amine loading amount. As described above, the CO₂ adsorbing material 100 disclosed herein includes the support structure 20 that is superior in the gas diffusion property. Thus, according to the herein disclosed technique, it is possible to improve the CO₂ adsorbing performance even when the amine loading amount is smaller.

The amine compound 10 falls into any of various chemical compounds including at least one primary amino group (NH₂-). By a physical and chemical affinity of the above described amino group with respect to the CO₂, the CO₂ adsorbing material 100 disclosed herein can show to have a strong interaction with respect to the CO₂, in other words, the CO₂ adsorbing performance. A number of the primary amino groups included by the amine compound 10 is not particularly restricted, might be singular or might be plural. In addition, the amine compound 10 might further include a secondary amino group and/or a tertiary amino group, in addition to the primary amino group. Incidentally, as a state of the amine compound 10 is not particularly restricted, it might be a solid or a liquid at a room temperature. Incidentally, among the amine compound 10, there is one which becomes a solid at the CO₂ adsorbing time and which becomes a liquid at a CO₂ removal time (for example, isophoronediamine or the like), too. As the CO₂ adsorbing material 100 disclosed herein, it is possible to use an amine compound as described above.

As the amine compound 10, it is possible to use a chemical compound having a primary to tertiary amino group, such as amines, polyamines, and aminoorganosilane. As the amines, it is possible to use, for example, monoethanolamine, diethanolamine, triethanolamine, isophoronediamine, or the like. As the polyamines, it is possible to use, for example, polyethyleneimine, polypropyleneimine, ethylenediamine, diethylenetriamine, triethylenetetramine, tetraethylenepentamine, pentaethylenehexamine, or the like. As the aminoorganosilane, it is possible to use, for example, (3-aminopropyl) trimethoxysilane (APTMS), N-(2-aminoethyl)-3-aminopropyltrimethoxysilane, 3-aminopropyltriethoxysilane, N-(2-aminoethyl)-3-amino-propyltriethoxysilane, N-(2-aminoethyl)-3-amino-propylmethyldimethoxysilane, 3-triethoxysilyl-N-(1,3-dimethyl-butylidene) propylamine, N-phenyl-3-aminopropyltrimethoxysilane, N-(n-butyl)-3-aminopropyltrimethoxysilane, or the like. Regarding the amine compound, 1 kind might be used alone, or two or more kinds might be mixed and then used. Among them, it is preferable that the amine compound 10 includes a polyalkyleneimine, such as polyethyleneimine and polypropyleneimine.

The support structure 20 can be molded in a sheet shape, a rectangular parallelepiped shape, a cube shape, a prismatic shape, a column shape, a spherical shape, or the like. Although not particularly restricting, it is preferable that the support structure 20 is the support sheet being molded in the sheet shape. In a situation where the support structure 20 is molded in the sheet shape, it is preferable that, for example, a thickness is 0.3 mm or more and 5 mm or less.

Although not particularly restricting, it is preferable that the support structure 20 has a hydrothermal resistance being higher. The hydrothermal resistance of the support structure 20 is preferably 120°C or more, is further preferably 140°C or more, might be 150°C or more, or might be 160°C or more. By this, even on an environment exceeding 100°C or even on a comparatively humid environment, it is possible to suitably use the CO₂ adsorbing material 100 disclosed herein. The hydrothermal resistance of the support structure 20 is, for example, preferably 250°C or less, or might be 200°C or less. Incidentally, "the hydrothermal resistance of the support structure" can be evaluated, by drying the support structure having been immersed into a hot water in an autoclave and then by measuring the strength with a conventionally known tensile test.

The resin matrix 30 has a three-dimensional network structure that includes the pores 32. A mean pore diameter A of the resin matrix 30 is preferably 0.4 µm or more, further preferably 0.5 µm or more, or 1 µm or more. By this, it is possible to suitably enhance the amine loading amount. If the mean pores diameter A of the resin matrix 30 is too large, there is a fear that the porous particle 40 is detached from the resin matrix 30. From the above described perspective, the mean pores diameter A of the resin matrix 30 is, for example, preferably 7 µm or less, further preferably 5 µm or less, or furthermore preferably 3 µm or less. Incidentally, "the mean pores diameter of the resin matrix" can be obtained, for example, by performing a mercury penetration method with a commercially available mercury porosimeter.

The resin matrix 30 includes the resin, and can be configured by crystal particles of this resin being bound. Although not particularly restricting, it is preferable that the resin matrix 30 includes the resin whose glass transition temperature (Tg) is 70°C or more. By this, the heat resistance of the CO₂ adsorbing material 100 is enhanced. The glass transition temperature of the resin included in the resin matrix 30 is preferably 70°C or more, further preferably 100°C or more, or furthermore preferably 120°C or more. The glass transition temperature of the resin included in the resin matrix 30 might be, for example, 260°C or less, or might be 250°C or less. Incidentally, "the glass transition temperature of the resin" can be measured according to a conventionally known differential scanning calorimetry (DSC) measurement, a dynamic mechanical analysis method (DMA method), or the like.

In addition, although not particularly restricting, it is preferable that the resin matrix 30 includes the resin whose hydrothermal resistance is high. By this, it is possible to enhance the hydrothermal resistance of the CO₂ adsorbing material 100. The hydrothermal resistance of the resin included in the resin matrix 30 is preferably 120°C or more, is further preferably 140°C or more, might be 150°C or more, or might be 160°C or more. The hydrothermal resistance of the resin included in the resin matrix 30 is, for example, preferably 300°C or less, might be 250°C or less, or might be 200°C or less. Incidentally, as "the hydrothermal resistance of the resin", a nominal value (a catalog value) shown by each manufacturer, or the like, can be used.

A content amount of the resin is not particularly restricted, but is preferably 30 mass% or more and 80 mass% or less, further preferably 35 mass% or more and 70 mass% or less, or furthermore preferably 40 mass% or more and 60 mass% or less when the total mass of the support structure 20 is treated as 100 mass%. By this, it is possible to suitably increase the amine loading amount, and then it is possible to enhance the CO₂ adsorbing performance of the CO₂ adsorbing material 100.

Although not particularly restricting, as the resin component included in the resin matrix 30, it is possible to use the resin categorized in an acrylic resin, a cellulose-base resin, a super engineering plastic (super engineering plastics). The resin matrix 30 might include any 1 kind of the above described resins, or might include a mixture of two or more kinds.

The acrylic resin semantically covers general of polymers including alkyl (meth)acrylate as a constituent monomer component, and of their derivatives. Incidentally, the wording "(meth)acrylate", or the like, in the present description is used as a term comprehensively meaning an acrylate and/or a methacrylate. As the acrylic resin, it is possible to use, for example, a polymer that includes the alkyl (meth)acrylate as a main monomer (a component occupying 50 mass% or more of whole monomers) or a copolymer that includes the above described main monomer and a secondary monomer having a copolymerization property for the main monomer. In particular, for example, it is possible to use poly(meth)acrylic acid, poly(meth)acrylamide, polymethyl methacrylate (PMMA), or the like. Among them, it is preferable that the resin matrix 30 includes methacrylic acid, and PMMA.

The cellulose-base resin semantically covers general of cellulose-derived chemical compounds (cellulose derivatives). In particular, for example, it is possible to use ethyl cellulose (EC), hydroxyethyl cellulose (HEC), ethyl methyl cellulose (EMC), hydroxyethyl methyl cellulose (HEMC), nitrocellulose, diacetyl cellulose, or the like. Among them, it is preferable that the resin matrix 30 includes the ethyl cellulose.

The super engineering plastic is a thermoplastic resin whose heat resistance and mechanical strength are very high. As the super engineering plastic, it is possible to use, in particular, a fluorine-base resin, such as polytetrafluoroethylene (PTFE), tetrafluoroethylene-perfluoro vinyl ether copolymer (PFA), tetrafluoroethylene-hexafluoropropylene copolymer (FEP), chlorotrifluoroethylene homopolymer (PCTFE), ethylene-tetrafluoroethylene copolymer (ETFE), ethylene-chlorotrifluoroethylene copolymer (ECTFE), and vinylidene fluoride homopolymer (PVDF); a thermoplastic polyimide, such as polybenzimidazole (PBI), polyimide (PI), polyetherimide (PEI), and polyamideimide (PAI); polyethersulfone (PES), polyether ether ketone (PEEK), polyethersulfide, polyphenylene sulfide, or the like. Among them, it is preferable that the resin matrix 30 includes the PEI, the PES, or the PVDF.

It is enough regarding the porous particle 40 if it is an inorganic porous material that can support the amine compound 10. For example, it is preferable to use a porous material whose specific surface area size is comparatively large. As the porous particle 40, for example, an oxide of a semimetal element or metal element, or a solid solution of it can be used preferably. In particular, it is possible to use a silica particle, an alumina particle, a ceria particle, a zirconia particle, a titania particle, or the like. For them, it is possible to use any of one kind or two or more kinds, without particular restriction. Among them, it is preferable that the porous particle 40 includes the silica particle.

The porous particle 40 includes the pores 42. The porous particle 40 can be, for example, a mesoporous material that includes a mesopore. The wording "mesopore" means a plurality of pores whose pores diameter is within a range being 2 nm or more and less than 50 nm, based on IUPAC classification. The amine compound 10 is disposed in the pores 42 of the porous particle 40. It is preferable that the amine compound 10 is, for example, disposed in the mesopores of the porous particle 40.

A mean pores diameter B of the porous particle 40 is, for example, preferably 2 nm or more, or further preferably 10 nm or more. By this, it is possible to suitably introduce into the pore 42 when the amine compound 10 is supported. The mean pores diameter B of the porous particle 40 is, for example, preferably 100 nm or less, further preferably 70 nm or less, furthermore preferably 50 nm or less, or preferably in particular 30 nm or less. By this, it is possible to suitably increase the specific surface area size of the porous particle 40, and thus it is possible to further enhance the amine loading amount. Incidentally, "the mean pores diameter of the porous particle" can be measured, for example, by using a commercially available pores diameter distribution measuring device with respect to the support structure, so as to refer pores diameter distribution obtained by a gas adsorbing method based on a BJH method.

An average particle diameter of the porous particle 40 is not particularly restricted. If the average particle diameter of the porous particle 40 is too small, there is a tendency that the dispersion on the support structure 20 is not easily generated. From the above described perspective, the average particle diameter of the porous particle 40 is, for example, 100 nm or more, might be 1 µm or more, might be 3 µm or more, or might be 5 µm or more. On the other hand, as described above, the porous particle 40 includes many voids (the pores 42), and thus there are some fears that it becomes easily broken by a collision of the porous particles, or the like, if the average particle diameter is too large. From the above described perspective, the average particle diameter of the porous particle 40 is, for example, 100 µm or less, might be 50 µm or less, or might be 15 µm or less. Incidentally, in the present description, the wording "average particle diameter of the porous particle" means an arithmetic average value of an equivalent circle diameter measured on the basis of an optical microscope observation. Here, the equivalent circle diameter means a diameter of a circle whose area size is the same as an area size of an ellipse being formed by a long diameter and a short diameter, as the long diameter is the longest diameter of the porous particle observed with a microscope observation image and the short diameter is the longest diameter of lines intersecting with this long diameter at right angles. In the present description, the average particle diameter of the porous particle means an arithmetic average value of equivalent circle diameters of 200 porous particles that have been selected at random.

Although not particularly restricting, from a perspective of increasing a contact area size in which the amine compound 10 and the CO₂ come into contact with each other on the CO₂ adsorbing material 100, the porous particle 40 whose specific surface area size is large is preferable. A specific surface area size (a BET specific surface area size) of the porous particle 40 measured by the BET method is, for example, preferably 130 m²/g or more and 650 m²/g or less, further preferably 190 m²/g or more and 550 m²/g or less, or preferably in particular 200 m²/g or more and 450 m²/g or less. Incidentally, in the present description, "the BET specific surface area size of the porous particle" can be measured by a nitrogen adsorbing method with a commercially available specific surface area size measuring device.

In addition, although not particularly restricting, from a perspective of increasing the amine loading amount, it is preferable to use the porous particle 40 whose oil absorption amount is high. The oil absorption amount of the porous particle 40 is, for example, preferably 100 ml/100g or more and 400 ml/100g or less, further preferably 150 ml/100g or more and 380 ml/100g or less, or furthermore preferably 240 ml/100g or more and 330 ml/100g or less. Incidentally, as "the oil absorption amount of the porous particle", it is possible to use the catalog value of each manufacturer, or the like.

A content amount of the porous particle 40 is not particularly restricted, but is preferably 20 mass% or more and 70 mass% or less, further preferably 30 mass% or more and 65 mass% or less, or further preferably 40 mass% or more and 60 mass% or less, when the total mass of the support structure 20 is treated as 100 mass%. By this, it is possible to suitably enhance the CO₂ adsorbing performance of the CO₂ adsorbing material 100.

Although not particularly restricting, in the support structure 20, a mass ratio of the porous particle 40 and the resin configuring the resin matrix 30 is, for example, preferably 20 : 80 to 70 : 30, further preferably 30 : 70 to 65 : 35, or furthermore preferably 40 : 60 to 65 : 35. By this, a balance of the pores 32 derived from the resin matrix 30 and the pores 42 derived from the porous particle 40 can be suitably adjusted, and thus it is possible to enhance the amine loading amount.

### <Manufacturing method of CO₂ adsorbing material>

Next, an example of a method for manufacturing the herein disclosed CO₂ adsorbing material 100 would be described. The CO₂ adsorbing material 100 disclosed herein can include a preparing step at which a slurry for forming the support structure is prepared, a molding step at which a molded body is manufactured from this slurry for forming the support structure, an immersing step at which the molded body is immersed in an aqueous solvent, a first drying step at which the molded body after the immersing step is dried, a supporting step at which the amine compound 10 is supported by the support structure 20 after the first drying step, and a second drying step at which the support structure 20 having supported the amine compound 10 is dried. Incidentally, the herein disclosed CO₂ adsorbing material 100 is not restricted to one manufactured by a below described manufacturing method.

At the preparing step, a slurry-formed composition (the slurry for forming the support structure) is prepared which includes at least the porous particle 40, the resin, and an organic solvent. Incidentally, the term "paste" in the present description is used as a term semantically covering types referred to as "slurry" and "ink". As one example, at the preparing step, the porous particle 40 is put into the organic solvent and then stirred. By this, the porous particle 40 is dispersed in the organic solvent. Next, the resin is put into the organic solvent in which the porous particle 40 has been dispersed, and then is stirred. By this, the resin is dissolved into the organic solvent. Although not particularly restricting, at the preparing step, it is good that the porous particle 40 and the resin are put into the organic solvent, and then are stirred in a state heated to be 40°C to 60°C.

As the resin, it is possible to suitably use the resin that is dissolved in the organic solvent and that is precipitated to have a mesh network structure form at the immersing step described later. Among them, it is preferable to use the PEI, the PES, or the PVDF.

Regarding a mass ratio of the porous particle 40 and the resin, for example, it is preferable to be mixed so as to be 20: 80 to 70: 30, it is further preferable to be mixed so as to be 30 : 70 to 65 : 35, and it is furthermore preferable to be mixed so as to be 55 : 45 to 65 : 35.

The organic solvent is not particularly restricted, insofar as it can dissolve the resin. As one example of the organic solvent, it is possible to use amides, such as diethylformamide, dimethylacetamide, dimethylformamide, N-methylpyrrolidone, and dimethylimidazolidinone; alkyl ketones, such as dimethyl sulfoxide, acetone, and methyl ethyl ketone; ethers, such as tetrahydrofuran, dioxane, and diglyme; glycol ethers, such as ethylene glycol and diethylene glycol; or the like. Among them, 1 kind might be used alone, or two or more kinds might be combined so as to be used. A mass ratio of the organic solvent included in the slurry for forming the support structure is not particularly restricted. A content amount of the organic solvent occupying the slurry for forming the support structure is, for example, preferably 30 mass% to 80 mass%. By this, it is possible to suitably manufacture the molded body at the molding step.

Additionally, into the slurry for forming the support structure, a conventionally known additive agent might be added insofar as the effect of the herein disclosed technique is not significantly spoiled. As one example of the additive agent, it is possible to use a dispersing agent, a plasticizing agent, an antifoaming agent, a thickening agent, or the like. For example, as the additive agent, it is possible to preferably use a hydrophilic polymer, such as polyethylene glycol (PEG). A content amount of the additive agent in the slurry for forming the support structure is, for example, preferably 30 mass% or less, might be 20 mass% or less, or might be 10 mass% or less.

At the molding step, the above prepared slurry for forming the support structure is used so as to mold the molded body. For example, a doctor blade is used to supply the slurry for forming the support structure on a glass substrate so as to have a predetermined thickness, and thus the molded body formed in the sheet shape can be manufactured. Alternatively, an extrusion molding is performed on the slurry for forming the support structure so as to make it be formed in a predetermined shape, a printing is performed on a metal plate or a metal mesh, or a dip coating is performed on a core material, so that it is possible to manufacture the molded body formed in the predetermined shape.

At the immersing step, the molded body having been prepared at the molding step is immersed into an aqueous solvent (for example, water). By this, the organic solvent included in the molded body is substituted with the aqueous solvent, and thus the resin is precipitated. A point, at which the organic solvent included in the molded body has been substituted with the aqueous solvent, becomes the pores 32, and thus the resin matrix 30 as described above is suitably formed when the resin is precipitated. The porous particle 40 is dispersed into the organic solvent, thus the resin matrix 30 is formed to surround the porous particle 40, and then the porous particle 40 is disposed in the pores 32 of this resin matrix 30.

The aqueous solvent used at the immersing step is not particularly restricted. The aqueous solvent might be, for example, water, or might be a mix solution of the water and an alcohol, or a surface active agent might be added to the water. As the aqueous solvent, it is possible to preferably use an ion exchange water (a deionized water), a pure water, an ultrapure water, a distilled water, or the like.

At the first drying step, the molded body after the immersing step is dried, and thus the aqueous solvent is removed from the molded body. By this, it is possible to suitably manufacture the support structure 20 including the structure as described above. A drying means at the first drying step is not particularly restricted, and it is possible to use, for example, a hot air drying equipment, a low humidity air drying equipment, a vacuum drying equipment, a various infrared drying equipment, an electromagnetic induction drying equipment, a microwave drying equipment, a dry air, or the like, or it is possible to use one of drying acceleration means, such as air blowing, compression, and heating, or to combine and then use them. A drying temperature (a set temperature of the drying equipment, or the like) at the first drying step can be appropriately selected on the basis of a type or amount of the solvent in the mixture, but can be set to be, for example, 60°C to 150°C, or preferably 80°C to 120°C. In addition, a drying time is also appropriately selected on the basis of a type or amount of the aqueous solvent, and is not particularly restricted.

The support structure 20 includes a structure as described above, and thus has a water absorption rate that is high.

Although not particularly restricting, the water absorption rate of the support structure 20 based on the Archimedes method is preferably 140% or more, is further preferably 145% or more, is furthermore preferably 147% or more, might be 190% or more, or might be 200% or more. By making the support structure 20 have the high water absorption rate, the loading amount for the amine compound 10 per volume can be increased, and thus it is possible to support more amine compound 10 than a conventional one at the supporting step described later. From the above described perspective, it is preferable that the water absorption rate is higher, and an upper limit value is not particularly restricted. For example, the water absorption rate of the support structure 20 based on the Archimedes method might be 400% or less, might be 370% or less, or might be 350% or less. Incidentally, "the water absorption rate of the support structure" can be calculated on the basis of the Archimedes method. In further particular, regarding the support structure after the first drying step, a dry weight W_{Air}, an underwater weight W_{Aq}, and a hydrated weight W_{a + w} are measured, and the water absorption rate (Aw) can be calculated on the basis of the following Formula (1). $Aw \left(%\right) = \left({W}_{a + w}-{W}_{Air}\right) / {W}_{Air} \times 100$

In addition, the support structure 20 includes the structure as described above, and thus has a high porosity rate. Although not particularly restricting, the porosity rate of the support structure 20 based on the Archimedes method is preferably 65% or more, further preferably 70% or more, or furthermore preferably 75% or more. By this, it is possible to suitably make the amine compound 10 and the CO₂ come into contact with each other. The porosity rate of the support structure 20 based on the Archimedes method is, for example, preferably 90% or less, or might be 86% or less. Incidentally, "the porosity rate of the support structure" can be calculated on the basis of the Archimedes method. Further particularly, the dry weight W_{Air}, underwater weight W_{Aq}, and hydrated weight W_{a + w} of the support structure after the first drying step are measured and then the porosity rate (P) is calculated on the basis of Formula (2) described below. $P \left(%\right) = \left({W}_{a + w}-{W}_{Air}\right) / \left({W}_{a + w}-{W}_{Aq}\right) \times 100$

At the supporting step, the above manufactured support structure 20 is made to support the amine compound 10. It is enough that a method for introducing the amine compound 10 to the support structure 20 is according to a conventionally known method. For example, by preparing a solution in which the above described amine compound 10 is dissolved into a predetermined organic solvent (for example, a lower alcohol, such as ethanol), and then making the support structure 20 be immersed into this solution, it is possible to make the support structure 20 support the amine compound 10. Alternatively, at the supporting step, the support structure 20 might be exposed to an atmosphere where the above described amine compound 10 is made to be in a gas phase state, so as to make the support structure 20 support the amine compound 10.

As described above, the CO₂ adsorbing material 100 disclosed herein includes the predetermined structure, and thus the amine loading amount of the support structure 20 is enhanced. A concentration of the amine compound at the supporting step is not particularly restricted, but it is preferable that, for example, the concentration of the amine compound is adjusted so as to make an amount of the amine compound 10 with respect to the CO₂ adsorbing material 100 (the amine loading amount) be 24 mass% or more and 56 mass% or less (further suitably 25 mass% or more and 56 mass% or less, further suitably 30 mass% or more and 56 mass% or less, or suitably in particular 43 mass% or more and 56 mass% or less). By this, it is possible to provide the CO₂ adsorbing material 100 superior in the CO₂ adsorbing performance.

At the second drying step, the support structure 20 which is after the supporting step is dried, so as to remove the organic solvent from the support structure 20. By this, it is possible to suitably manufacture the CO₂ adsorbing material 100 including the structure as described above. The drying means at the second drying step is not particularly restricted, and thus it might be, for example, similar to one at the first drying step. The drying temperature at the second drying step (the set temperature of the drying equipment, or the like) can be appropriately selected on the basis of the type and amount of the solvent in the mixture, but can be set, for example, to be 60°C to 150°C, or preferably 80°C to 120°C. In addition, it is enough that the drying time is also appropriately selected on the basis of the type and amount of the organic solvent, and thus it is not particularly restricted.

As described above, the CO₂ adsorbing material 100 disclosed herein can be suitably manufactured. The above described CO₂ adsorbing material 100 has the large amine loading amount as described above, and thus the CO₂ adsorbing performance is good. According to the above described CO₂ adsorbing material 100, it is possible to adsorb and remove the carbon dioxide efficiently from the emission gas including the carbon dioxide.

### <Test example>

Below, test examples related to the herein disclosed technique would be explained, which is not intended to restrict the herein disclosed technique into the test examples.

### <Manufacture of CO₂ adsorbing material>

### (Example 1)

At first, 135 g of porous silica particle (SiO₂, mean particle diameter 9 µm) was prepared as the porous particle, 80 g of polyetherimide (PEI) was prepared as the resin, 500 g of dimethyl sulfoxide (DMSO) as the organic solvent was prepared, and 28 g of polyethylene glycol (PEG) was prepared as the additive agent. By this, the slurry for forming the support structure of Example 1 was prepared. Then, the doctor blade was used to apply the slurry for forming the support structure of Example 1 onto the glass substrate so as to make a thickness be 2 mm, so that the molded body formed in the sheet shape was obtained. This sheet-shaped molded body was immersed into the water for 24 hours. Then, the molded body having been immersed into the water was dried at 80°C for 5 hours, so that the support structure (the support sheet) of Example 1 formed in the sheet shape was obtained.

Next, the ethanol and the polyethyleneimine (made by Nippon Shokubai Co., Ltd., EPOMIN, PEI012) were mixed at a mass ratio being 1 : 1, a rotor was rotated at 150 rpm with a stirrer, and then the stirring was performed for 24 hours. The obtained support sheet of Example 1 as described above was cut out to satisfy φ 6mm, thickness 1 mm, and weight 1 g. This support sheet piece was put into 15 g of the solution after the stirring, and then the shaking was performed for 24 hours. The support sheet piece was collected from the solution, and then a surface of this support sheet piece was washed with the ethanol. Then, it was dried at 80°C for 5 hours. By this, the CO₂ adsorbing material of Example 1 was obtained in which the amine compound was supported by the support structure.

### (Example 2)

In Example 2, the SiO₂ whose mean particle diameter was 6 µm was used as the porous particle. Then, respective materials were mixed to satisfy the mass ratio being SiO₂ : PEI : DMSO : PEG = 18 : 11 : 67 : 4, so as to prepare the slurry for forming the support structure of Example 2. In addition, after this slurry was molded to have the sheet shape similarly to Example 1, the sheet was immersed for 24 hours into the solution in which the water and the ethanol were mixed at a rate being 5 : 95. Matters other than them were treated similarly to Example 1, so that the support structure of Example 2 formed in the sheet shape was obtained. Next, similarly to Example 1, the support structure was made to support the amine compound, so that the CO₂ adsorbing material of Example 2 was obtained.

### (Example 3)

In Example 3, the N-methylpyrrolidone (NMP) was used as the solvent. Then, respective materials were mixed to satisfy a mass ratio being SiO₂ : PEI : NMP : PEG = 18 : 11 : 67 : 4, so that the slurry for forming the support structure of Example 3 was prepared. Matters other than this were treated similarly to Example 1, so that the support structure of Example 3 formed in the sheet shape was obtained. Next, similarly to Example 1, the support structure was made to support the amine compound, so that the CO₂ adsorbing material of Example 3 was obtained.

### (Example 4)

In Example 4, the SiO₂ whose mean particle diameter was 6 µm was used as the porous particle. Then, respective materials were mixed to satisfy a mass ratio being SiO₂ : PEI : DMSO : PEG = 14 : 8 : 51 : 27, so that the slurry for forming the support structure of Example 4 was prepared. Matters other than this were treated similarly to Example 1, so that the support structure of Example 4 formed in the sheet shape was obtained. Next, similarly to Example 1, the support structure was made to support the amine compound, so that the CO₂ adsorbing material of Example 4 was obtained.

### (Example 5)

In Example 5, the SiO₂ whose mean particle diameter was 6 µm was used as the porous particle. In addition, the polyethersulfone (PES) was used as the resin. Then, respective materials were mixed to satisfy a mass ratio being SiO₂ : PES : NMP : PEG = 18 : 11 : 67 : 4, so that the slurry for forming the support structure of Example 5 was prepared. Matters other than this were treated similarly to Example 1, so that the support structure of Example 5 formed in the sheet shape was obtained. Next, similarly to Example 1, the support structure was made to support the amine, so that the CO₂ adsorbing material of Example 5 was obtained.

### (Example 6)

In Example 6, the NMP was used as the solvent. Then, respective materials were mixed to satisfy a mass ratio being SiO₂ : PEI : NMP : PEG = 16 : 20 : 60 : 4, so that the slurry for forming the support structure of Example 6 was prepared. Matters other than this were treated similarly to Example 1, so that the support structure of Example 6 formed in the sheet shape was obtained. Next, similarly to Example 1, the support structure was made to support the amine, so that the CO₂ adsorbing material of Example 6 was obtained.

### (Example 7)

In Example 7, the PES was used as the resin. In addition, the N-methylpyrrolidone (NMP) was used as the solvent. Then, respective materials were mixed to satisfy a mass ratio being SiO₂ : PES : NMP : PEG = 24 : 13.5 : 56 : 6.5, so that the slurry for forming the support structure of Example 7 was prepared. Matters other than this were treated similarly to Example 1, so that the support structure of Example 7 formed in the sheet shape was obtained. Next, similarly to Example 1, the support structure was made to support the amine, so that the CO₂ adsorbing material of Example 7 was obtained.

### (Example 8)

In Example 8, the PEI and the Polymethyl methacrylate (PMMA) were used as the resin. In addition, the N-methylpyrrolidone (NMP) was used as the solvent. Then, they were mixed to satisfy a mass ratio being SiO₂ : PEI : PMMA : NMP : PEG = 16 : 10 : 10 : 60 : 4, so that the slurry for forming the support structure of Example 8 was prepared. Matters other than this were treated similarly to Example 1, so that the support structure of Example 8 formed in the sheet shape was obtained. Next, similarly to Example 1, the support structure was made to support the amine, so that the CO₂ adsorbing material of Example 8 was obtained.

### (Example 9)

In Example 9, the PEI and the ethyl cellulose (EC) were used as the resin. In addition, the N-methylpyrrolidone (NMP) was used as the solvent. Then, they were mixed to satisfy a mass ratio being SiO₂ : PEI : EC : NMP : PEG = 16 : 10 : 10 : 60 : 4, so that the slurry for forming the support structure of Example 9 was prepared. Matters other than this were treated similarly to Example 1, the support structure of Example 9 formed in the sheet shape was obtained. Next, similarly to Example 1, the support structure was made to support the amine, so that the CO₂ adsorbing material of Example 9 was obtained.

### (Example 10)

In Example 10, with a procedure of the above described Example 3, the support structure formed in the sheet shape was manufactured. Next, in Example 10, except for a point that the mass ratio of the ethanol and the polyethyleneimine was changed from 1 : 1 to 8 : 2, according to a procedure the same as Examples 1 to 9, the supporting the amine compound was performed. By this, the CO₂ adsorbing material (Example 10) was obtained, in which a small amount of amine was supported by the support structure the same as Example 3.

### (Comparative example 1)

In Comparative example 1, 10 g of the porous silica particle (the SiO₂, mean particle diameter 6 µm) as the porous particle was prepared. With a die and a press machine, the porous silica particle is subjected to a press molding to satisfy the φ 15 mm and the thickness 2 mm, so as to obtain the molded body. By drying this molded body at 800°C for 2 hours, the support structure of Comparative example 1 was obtained. Next, 1 g of this support structure was cut out. Similarly to Example 1, this support structure was made to support the amine, so that the CO₂ adsorbing material of Comparative example 1 was obtained.

### <Measurement of mean pores diameter of resin matrix before supporting amine>

The mean pores diameter of the resin matrix of the support structure of each example before supporting the amine was measured by the mercury penetration method. In particular, at first, the support structure of each example before supporting the amine was cut out to have a size about 5 mm x 5 mm, and then a pretreatment was performed in which it was held for 3 hours under a state being heated to be 120°C. Next, with the mercury porosimeter (made by Micromeritics Instrument Corporation, Auto Pore IV 9500), the mercury was introduced within a range being 0.10 to 60000 psia, so that the pores distribution of each example was obtained. From a peak position of the obtained pores distribution, a mean pores diameter A (µm) of the resin matrix of the support structure of each example before supporting the amine was calculated. The result is shown in Table 1. Incidentally, although Comparative example 1 does not include the resin, the pores diameter having been calculated by a method similar to the above described one was treated as the mean pores diameter A and shown in Table 1.

### <Measurement of mean pores diameter of porous particle before supporting amine>

The mean pores diameter of the porous particle of the support structure of each example before supporting the amine was measured with a nitrogen gas adsorbing method. In particular, at first, the support structure of each example before supporting the amine was cut out to have a size about 5 mm x 5 mm, and then a pretreatment was performed under a vacuum condition in which it was held at 120°C for 3 hours. Next, the pores diameter distribution measuring device (made by MicrotracBEL Corp., BELSORP MINI) was used, a nitrogen gas introduction at 77 k was performed, and then an adsorption isotherm of each example was obtained. The obtained adsorption isotherm was converted by a BJH method into the pores distribution, so that the pores capacity V (cm³/g) and the specific surface area size S (m²/g) were obtained. Then, with a following formula: Mean pores diameter B (nm) = 4V/S; the mean pores diameter B (nm) of the porous particle of the support structure of each example before supporting the amine was calculated. The result is shown in Table 1.

### <Measurement of amine loading amount>

The loading amount for the amine compound (the amine loading amount) for the CO₂ adsorbing material of each example was obtained as described below. A mass (g) of the CO₂ adsorbing material before being put into the solution (the support structure) was treated as A0, and a mass (g) of the CO₂ adsorbing material after being put into the solution and being dried (support structure + amine compound) was treated as A1. Then, with a following formula: Amine loading amount (mass%) = {(A1 - A0)/A1} x 100; the amine loading amount (mass%) of each example was calculated. The result is shown in Table 1.

### <Measurement of CO₂ adsorbing amount>

The CO₂ adsorbing amount of the CO₂ adsorbing material of each example was obtained as described below. At first, after the CO₂ adsorbing material having been dried was put into a glass tube, a pretreatment was performed in which He gas was made to flow through it so as to remove moisture and the adsorbed CO₂ and N2. At that time, the He gas was made to flow through for 3 hours under a condition of temperature: 100°C and flowing gas amount: 30 ml/min. Next, through the CO₂ adsorbing material of each example after the pretreatment, 5% CO₂-N₂ gas was made to flow. At that time, the 5% CO₂-N₂ gas was made to flow through for 150 minutes under a condition of temperature: 60°C and flowing gas amount: 30 ml/min. With a mass analyzer (made by MicrotracBEL Corp., Belcat, BEL Mass), the CO₂ and N₂ included in the gas at the emitted side were detected, and then a CO₂ breakthrough curve and a N₂ breakthrough curve were obtained. As one example, the CO₂ breakthrough curve and N₂ breakthrough curve of Example 1 are shown in FIG. 2. In addition, the CO₂ adsorbing amount of each example was calculated as described below. At first, a time of the minimum strength, just before the N₂ detection strength started increasing drastically, was treated as t1, and a time of the maximum strength, just before the CO₂ detection strength started decreasing drastically, was treated as t2. A CO₂ signal strength at t2 is treated as P2, and with a formula: S1 = (t2 - t1) x P2; an area size S1 was obtained. The obtained area size S1 was converted into a CO₂ supply amount. Next, by integrating the CO₂ breakthrough curve, an area size S2 was obtained. Then, an area size S3 was calculated by (S1 - S2), the area size S3 was converted into the CO₂ adsorbing amount (mmol/g), and thus the CO₂ adsorbing amount of each example was calculated. The result is shown in Table 1.

### [Table 1]

**Table 1**

| | Support structure | | Amine loading amount (mass%) | CO2 adsorbing amount (mmol/g) |
|---|---|---|---|---|
| | Mean pore diameter A of resin matrix (µm) | Mean pore diameter B of porous particle (nm) | | |
| Example 1 | 1.60 | 16.70 | 53.27 | 2.51 |
| Example 2 | 0.56 | 22.6 | 56.0 | 2.46 |
| Example 3 | 1.60 | 16.54 | 46.2 | 1.63 |
| Example 4 | 1.05 | 17.63 | 51.0 | 1.90 |
| Example 5 | 1.46 | 16.8 | 43.5 | 2.10 |
| Example 6 | 1.89 | 12.9 | 44.4 | 1.92 |
| Example 7 | 3.00 | 25.7 | 28.9 | 1.47 |
| Example 8 | 2.11 | 13.1 | 53.3 | 1.73 |
| Example 9 | 1.29 | 14.6 | 44.54 | 2.07 |
| Example 10 | 1.60 | 16.54 | 24.16 | 1.53 |
| Comparative example 1 | 0.3 *¹ | 18.1 | 24.8 | 1.39 |

| | | | | |
|---|---|---|---|---|
| *1: Although Comparative example 1 does not contain the resin, the pore diameter having been calculated by a method similar to Examples 1 to 9 was described as the mean pore diameter A. | | | | |

As shown in Table 1, it can be understood, in Example 1 to Example 9, that the CO₂ adsorbing amount is 1.45 mmol/g or more and thus the CO₂ adsorbing performance is good. About this, it is estimated that this is because, in Examples 1 to 9, by using a CO2 adsorbing material having a structure in which porous particles are disposed in the pores of a resin matrix with a three-dimensional network structure, and the amine compound is disposed in the mesopores of these porous particles, the loading amount of the amine compound was increased. On the other hand, in Comparative example 1 including no resin and being configured with the porous particle, although the amine was tried to be supported with the procedure the same as Examples 1 to 9, the amine loading amount was largely decreased. It is estimated that this is one of the reasons why the CO₂ adsorbing performance of Comparative example 1 is lower.

Additionally, in Example 10, a condition of supporting the amine is changed so as to make the amine loading amount be smaller than Comparative example 1. However, even in this Example 10, the CO₂ adsorbing performance superior to Comparative example 1 was observed. From this matter, it is estimated that an enhancement of the CO₂ adsorbing performance of the herein disclosed technique is implemented by, in addition to the above described increase in the amine loading amount, a below described phenomenon, too. Firstly, the support structure having been used for Example 10 includes the three-dimensional network structure. This support structure including the mesh structure includes so many pores, and thus the gas diffusion property is excellent. By this, it is possible to make the adsorbing target (CO₂) efficiently come into contact with the adsorbing agent (the amine compound). By this, it is estimated about Example 10 that, although the amine loading amount is smaller than Comparative example 1, the suitable CO₂ adsorbing performance can be exhibited.

Above, a detailed description for a specific example of the herein disclosed technique has been explained, but it is merely illustrations, and thus it is not construed as limiting the scope of the appended claims. The technique recited in claims includes matters in which the above illustrated specific example is variously deformed or changed.

Incidentally, the herein disclosed technique includes Items 1 to 6 described below. The below described Items 1 to 6 are not restricted to the above described embodiment.

Item 1 relates to a CO₂ adsorbing material. The CO₂ adsorbing material of Item 1 comprising:
amine compound; and
a support structure for supporting the amine compound, wherein

the support structure comprises:
   a resin matrix that comprises a three-dimensional network structure having pores; and
   a porous particle that comprises a plurality of mesopores,
the porous particle is disposed in the pores of the resin matrix, and
the amine compound is disposed in the mesopores of the porous particle.

Item 2 is the CO₂ adsorbing material recited in Item 1, wherein
a loading amount of the amine compound is 24 mass% or more and 56 mass% or less.

Item 3 is the CO₂ adsorbing material recited in Item 1 or Item 2, wherein
the amine compound includes at least polyethyleneimine.

Item 4 is the CO₂ adsorbing material recited in any one of Items 1 to Item 3, wherein
a hydrothermal resistance is 120°C or more and 250°C or less.

Item 5 is the CO₂ adsorbing material recited in any one of Items 1 to Item 4, wherein
the resin matrix includes a resin having a glass transition temperature of 70°C or more and 250°C or less.

Item 6 is the CO₂ adsorbing material recited in any one of Items 1 to Item 5, wherein
the porous particle includes at least one selected from the group consisting of silica particle, alumina particle, ceria particle, zirconia particle, and titania particle.

### [Reference Signs List]

- 10: Amine compound
- 20: Support structure
- 30: Resin matrix
- 32: Pores
- 40: Porous particle
- 42: Pores
- 100: CO₂ adsorbing material

## Claims

1. A CO₂ adsorbing material, comprising:
amine compound; and
a support structure for supporting the amine compound, wherein
the support structure comprises:
a resin matrix that comprises a three-dimensional network structure having pores; and
a porous particle that comprises a plurality of mesopores,
the porous particle is disposed in the pores of the resin matrix, and
the amine compound is disposed in the mesopores of the porous particle.

2. The CO₂ adsorbing material according to claim 1, wherein
a loading amount of the amine compound is 24 mass% or more and 56 mass% or less.

3. The CO₂ adsorbing material according to claim 1 or 2, wherein
the amine compound includes at least polyethyleneimine.

4. The CO₂ adsorbing material according to claim 1 or 2, wherein
a hydrothermal resistance is 120°C or more and 250°C or less.

5. The CO₂ adsorbing material according to claim 1 or 2, wherein
the resin matrix includes a resin having a glass transition temperature of 70°C or more and 250°C or less.

6. The CO₂ adsorbing material according to claim 1 or 2, wherein
the porous particle includes at least one selected from the group consisting of silica particle, alumina particle, ceria particle, zirconia particle, and titania particle.
